Europäisches Patentamt

European Patent Office

Office européen des brevets

(11) Publication number: **0 352 458**

**A2**

## (12) EUROPEAN PATENT APPLICATION

(21) Application number: **89110583.5**

(22) Date of filing: **12.06.89**

(30) Priority: **25.07.88 NL 8801865**

(43) Date of publication of application:
**31.01.90 Bulletin 90/05**

(84) Designated Contracting States:
**DE ES FR GB IT NL**

(51) Int. Cl.⁴: **C08K 5/10 , C08L 69/00**

(71) Applicant: **GENERAL ELECTRIC COMPANY**
**1 River Road**
**Schenectady New York 12151(US)**

(72) Inventor: **Gosens, Johannes Cornelis**
**General Electric Plastics B.V. P.O. Box 117**
**NL-4600 AC Bergen op Zoom(NL)**
Inventor: **Pratt, Charles Franklin**
**General Electric Plastics B.V. P.O. Box 117**
**NL-4600 AC Bergen op Zoom(NL)**
Inventor: **Melching, Karen Henriette**
**General Electric Plastics B.V. P.O. Box 117**
**NL-4600 AC Bergen op Zoom(NL)**
Inventor: **Van Eck, Martinus**
**General Electric Plastics B.V. P.O. Box 117**
**NL-4600 AC Bergen op Zoom(NL)**

(74) Representative: **Schüler, Horst, Dr.**
**General Electric Praunheimer Landstrasse**
**50**
**D-6000 Frankfurt 90(DE)**

(54) **Polymer mixture having an aromatic polycarbonate and mould release agent.**

(57) The use of an ester having an as low as possible content of free OH-groups and an as low as possible acid number as a mould release agent in polycarbonate mixtures leads to an improvement of the mechanical and optical properties.

EP 0 352 458 A2

## Polymer mixture having an aromatic polycarbonate and mould release agent.

The invention relates to a polymer mixture having an aromatic polycarbonate and 0.01-5% by weight of an ester of an alcohol and a carboxylic acid with up to 30 carbon atoms as a mould release agent.

Such polymer mixtures are known from numerous patent publications. For this purpose reference may be made, for example, to US-A-4,131,575; US-A-3,784,595; US-A-3,836,499 and GB-1,567,517. US-A-4,131,575 describes the possibility of using partial ester as a mould release agent for polycarbonates.

The invention is based on the discovery that the use of the above-mentioned esters as mould release agents may lead to a deterioration of the mechanical properties of the aromatic polycarbonate; this applies in particular to the so-called ductile-brittle transition temperature. The ductile-brittle transition temperature is the temperature at which the fracture behaviour, for example, in an impact strength test, changes from a ductile behaviour into a brittle fracture behaviour.

The invention provides the possibility of obtaining polymer mixtures which comprise a carboxylic acid ester as a mould release agent without the deterioration of mechanical properties mentioned hereinbefore occurring.

The polymer mixture according to the invention is characterised in that the ester has an as low as possible content of free OH-groups and an as low as possible acid number.

The ester may be used in the same quantities as indicated in the above-mentioned literature references.

The polymer mixture according to the invention preferably comprises an ester having an acid number of less than 0.50 and having a content of free OH-groups of less than 0.10 per molecule.

The prevention of a decrease of the ductile-brittle transition temperature is of importance in particular for polymer mixtures which comprise an aromatic polycarbonate having a comparatively low molecular weight, for example, a weight averaged molecular weight as determined by measuring solution viscosity of 10,000 to 20,000. Such polycarbonates are generally used in the injection moulding process of optically readable record carriers, for example, compact discs, in connection with the favourable flow properties of their melt. However, these polycarbonates suffer from the disadvantage of having a comparatively high ductile-brittle (D/B) transition temperature. A further increase as a result of the addition of a mould release agent is most undesirable in such cases.

The polymer mixture according to the invention may also comprise one or more stabilisers.

The polymer mixture according to the invention preferably comprises an ester derived from a saturated fatty acid and a multivalent alcohol as a mould release agent. An example of such an ester is pentaerythritol tetrastearate. This last-mentioned ester is preferably used in the form of an ester having an acid number of less than 0.30 and an average content of free OH-groups of less than 0.10 per molecule.

The invention also relates to articles formed from the polymer mixture according to the invention.

The polymer mixture according to the invention comprises at any rate one or more of each of the following constituents:
A. aromatic polycarbonate and
B. carboxylic acid ester of an alcohol.

The polymer mixture may moreover comprise one or more of the following constituents:
C. conventional additives for aromatic polycarbonates.

A. Aromatic polycarbonates

Aromatic polycarbonates are materials known per se. They are generally prepared by reacting a dihydric phenol compound whith a carbonate precursor, for example, phosgene, a halogen formiate or a carbonate ester.

Aromatic polycarbonates are polymers which comprise units of the formula

$$-----(- O - A - O - \overset{\overset{\displaystyle O}{\displaystyle \|}}{C} -)----$$

wherein A is a bivalent aromatic radical which is derived from the dihydric phenol used in the preparation of the polymer. Mononuclear or polynuclear aromatic compounds which comprise two hydroxy radicals each bonded directly to a carbon atom of an aromatic nucleus may be used as dihydric phenols in the preparation of the aromatic polycarbonates.

The known branched polycarbonates as described, for example, in US-A-4,001,184 are also suitable.

Suitable aromatic polycarbonates are also the so-called polyester carbonates which are obtained by performing the polymerisation reaction in the presence of an ester precursor, for example, a difunctional carboxylic acid, for example, terephthalic acid or an ester-forming derivative thereof. These polyester carbonates have ester compounds and carbonate compounds in the polymeric chain. Polyester carbonates are described, for example, in US-A-3,169,121.

The aromatic polycarbonate may comprise certain terminal groups, for example, groups derived from monohydric phenols or their halogen formiate derivatives. The molecular weight of the aromatic polycarbonate and the molecular weight distribution can be controlled by the incorporation of such groups.

The aromatic polycarbonate in the polymer mixture according to the invention has a weight-avaraged molecular weight from 8,000 to 25,000; preferably from 10,000 to 20,000. This is to be understood to mean the weight-averaged molecular weight as obtained by measurement of solution viscosity, at 25°C in methylene chloride.

B. Carboxylic acid ester of an alcohol

The polymer mixture according to the invention comprises as a mould release agent an ester of an alcohol and a carbonxylic acid with up to 30 carbonatoms having an as low as possible content of free OH-groups, preferably of less than an average of 0.10 per molecule and having an as low as possible acid number, preferably of less than 0.50. The content of free OH-groups is determined as follows:

The ester is dissolved in carbon disulphide and the absorption is then measured at a wavelength of 2845 NM (IR). This absorption is compared with esters having a known content of free OH-groups and is decisive of the content of free OH-groups. This is expressed in free OH-groups per ester molecule.

The acid number may be determined as follows:

The ester is dissolved in chloroform. This solution is titrated with a o.1 N KOH solution in methanol with phenol red as an indicator. The acid number is stated as consumption mgKOH to neutralise 1 gram of ester.

Carboxylic acid esters which may be used in the polymer mixture according to the invention are commercially available, for example, from Messrs. Henkel GmbH.

Carboxylic acid esters derived from multivalent alcohols, for example, pentaerythritol, and from aliphatic carboxylic acids, with up to 30 carbonatoms for example, stearic acid, are preferably used in the polymer mixture according to the invention.

C. Conventional additives

The polymer mixture according to the invention may comprise any additive conventionally used for polymer mixtures comprising an aromatic polycarbonate.

To be mentioned are stabilisers, dyes and pigments, fillers, various fibres, for example, glass fibres, agents to improve the impact strength, agents to improve the flame-retarding properties. The polymer mixture may also comprise further polymeric constituents, for example, polyalkylene phthalates, ABS, ASA. The choice of additives optionally to be used is, of course, determined by the application in view of the polymer mixture. When using the polymer mixture according to the invention for the manufacture of optically readable record carriers, the polymer mixture usually comprises, in addition to the aromatic polycarbonate and the mould release agent, only stabilisers as further additives.

The invention will now be described in greater detail, by way of example, with reference to the ensuing specific examples.

Examples I and II and comparative examples A, B and C

Various polymer mixtures were prepared using the following constituents:

PC : an aromatic polycarbonate derived from bisphenol A and phosgene having a weight-averaged molecular weight of 18,000 as determined by solution viscosity measurement at 25°C in methylenechloride.

PETS-1 : a commercially available ester, namely pentaerythritol tetrastearate having an acid number of 1.76 and a content of free OH-groups of 0.21.

PETS-2 : a commercially available pentaerythritol tetrastearate having an acid number of 0.21 and a content of free OH-groups of 0.07.

Stab. : a mixture of conventional phosphorus-containing stabilisers.

EP 0 352 458 A2

The said constituents were compounded in an extruder and processed to pellets. Standardised plates and rods were injection-moulded from the resulting pellets to determine the following properties: the ductile/brittle transition temperature (D/B temp.) in the notch impact test according to Izod: ASTM D256 the yellowness index according to ASTM D1925; the "haze" according to ASTM D1003 and the light transmission according to ASTM D1003.

The quantities by weight of the above-mentioned constituents used and the results found are recorded in the following table.

TABLE

| Example | A | B | C | I | II |
|---|---|---|---|---|---|
| Composition (parts by weight) | | | | | |
| PC | 100 | 99.65 | 99.57 | 99.65 | 99.57 |
| PETS-1 | - | 0.35 | 0.35 | - | - |
| PETS-2 | - | - | - | 0.35 | 0.35 |
| Stab. | - | - | 0.08 | - | 0.08 |
| Properties | | | | | |
| °D/B temp (°C) | 40-50 | above 50 | above 50 | 40-50 | 40-45 |
| °Yellowness index | 2.5 | 2.0 | 1.6 | 1.8 | 1.6 |
| °Haze (%) | 1.1 | 0.8 | 1.4 | 0.7 | 1.7 |
| °Transmission (%) | 90.9 | 91.0 | 91.4 | 91.3 | 91.2 |

It may be seen from the results of the above Table that the D/B temperature for the pure polycarbonate used (comparative example A) increases by the addition of a small quantity of the commercially available mould release agent PETS-1 (comparative example B). The same unfavourable increase of the D/B temperature occurs with the further addition of a stabiliser (comparative example C). When an ester is used having a low content of free OH-groups and a low acid number (examples I and II) no deterioration (= rise) of the temperature D/B occurs.

When the mould release agent according to the invention is used, an important additional advantage occurs: a further improvement of the yellowness index, the "haze" and the transmission occurs also without the addition of stabilisers (see example I compared with examples B and A).

**Claims**

1. A polymer mixture having an aromatic polycarbonate and 0.01-5% by weight of an ester of an alcohol and a carboxylic acid with up to 30 carbonatoms as a mould release agent, characterised in that the ester has an as low as possible content of free OH-groups and an as low as possible acid number.

2. A polymer mixture as claimed in Claim 1, characterised in that the ester has an acid number of less than 0.50 and an average content of free OH-groups of less than 0.10 per molecule.

3. A polymer mixture as claimed in Claim 1, characterised in that the aromatic polycarbonate has a weight-averaged molecular weight from 10,000 to 20,000.

4. A polymer mixture as claimed in Claim 1, characterised in that the polymer mixture comprises one or more stabilisers.

5. A polymer mixture as claimed in Claim 1, characterised in that the polymer mixture comprises pentaerythritol tetrastearate having an acid number of less than 0.30 and an average content of free OH-groups of less than 0.10 per molecule as a mould release agent.

6. Articles formed from the polymer mixture according to the invention.

4